# EUROPEAN PATENT SPECIFICATION

(11) **EP 3 580 267 B1**
(45) Date of publication and mention of the grant of the patent: **30.10.2024**
(21) Application number: 18703332.9
(22) Date of filing: 08.02.2018
(51) Int. Cl.: C08K 3/34, C08K 5/103

(54) **COMPRESSED PARTICULATE COMPOSITIONS, METHODS OF MAKING THEM AND THEIR USE**
KOMPRIMIERTE TEILCHENFÖRMIGE ZUSAMMENSETZUNGEN, VERFAHREN ZUR HERSTELLUNG DAVON UND DEREN VERWENDUNG
COMPOSITIONS PARTICULAIRES COMPRESSÉES, PROCÉDÉS POUR LEUR FABRICATION ET LEUR UTILISATION

(30) Priority: 08.02.2017 EP 17305145; 08.03.2017 EP 17305243
(43) Date of publication of application: 18.12.2019
(73) Proprietor: ImerTech SAS, 75015 Paris (FR)
(72) Inventor: CREPIN-LEBLOND, Jérôme, 31770 Colomiers (FR); ABLER, Caroline, 31120 Roquettes (FR)
(74) Representative: Haseltine Lake Kempner LLP
(86) International application number: PCT/EP2018/053220
(87) International publication number: WO 2018/146222

(56) References cited:
- US-A1- 2004 116 578
- US-A1- 2012 238 686

## Description

### FIELD OF THE INVENTION

The present invention concerns compressed mineral compositions and their method of production. The invention further concerns the use of the compositions according to the invention as fillers, for example as fillers for polymeric compositions. Finally, fillers comprising the compressed compositions of the invention also form part of the invention.

### BACKGROUND OF THE INVENTION

Particulate mineral compositions have been developed to provide certain characteristics to polymers. For example, talc particulates have been developed to provide stiffness in plastics, or barrier performance in rubber. Exemplary talc particulates are described in US-A-6348536. These days, they are for instance used in polypropylene based formulations with talc contents ranging from about 5 to 40 wt.-%, based on the total content of the formulation.

For example, talcs may be used as functional fillers in polymer compositions, for example, to modify, enhance or modulate one or more electrical, physical, mechanical, thermal or optical properties of the functional compositions. Talcs may also be used as extender fillers, for example in inks or paints. For example, as plastic compounders, talc fillers provide stiffness, temperature resistance and dimensional stability.

Particulate wollastonites have also been employed as additives in paints and plastics. In plastics, wollastonite improves tensile and flexural strength, reduces resin consumption, and improves thermal and dimensional stability at elevated temperatures.

For high performance plastics, talc and/or wollastonite fillers employed are normally very fine. The bulk density and tapped density of these finely divided products is low, limiting their use, since this makes transport and handling difficult and economically challenging. In order to overcome these problems, compacted or deaerated particulate mineral compositions are generally offered on the market. Compacting is normally carried out using pelletisation presses, in the presence of water. Lower water content leads to higher bulk density, but lower dispersability for the end user. A compromise between these required properties must normally be found.

Ultrafine talc powder has a bulk density of about 0.1 to 0.4 g/cm³. Compacted ultrafine talc powder normally has a tapped density of about 0.8 to 1.2 g/cm³. Higher bulk densities, or tapped densities, will be required as demand for compacted particulate minerals is expected to rise in the future.

WO 2005/108506 A1 discloses talc containing compositions for use in thermoplastic materials, comprising talc, polyethylene wax and a surface active agent, such as amines, quaternary ammonium salts, quaternary polyammonium salts or carboxylic acids. The lower the amount of polyethylene wax in the composition is, the more surface active agent needs to be added in order to obtain satisfactory results. Overall, the granulated compressed talc compositions maintain a relatively low talc content of 92 wt.-% or less. Resin composition comprising an inorganic filler are also disclosed in US 2012/238686 A1 and US 2004/116578 A1.

The prior art therefore represents a problem.

### SHORT DESCRIPTION OF THE INVENTION

The present invention is defined in the appended claims.

In particular, the present invention is embodied by a composition comprising from 1 to 7 wt.-% organic binder, from 0 to 50 wt.-% water; and 90 to 99 wt.-% inorganic particulate material selected from talc, wollastonite or a mixture thereof, wherein the composition is a compressed granulated composition, such as brick, a briquette, a pellet, a pressing, a mould, a preform, a spray-dried powder, a tablet, an aggregate, a rod, a granulate, or an agglomerate, or any mixture thereof, wherein the wt.-% indicated is expressed compared to the total content non-aqueous components in the said composition, further wherein the said organic binder is selected from stearic acid or its salts, paraffin, glycerol monostearate, polyethylene glycol, ethylene-vinyl acetate (EVA) and mixtures thereof. It was found that compressed compositions with a high talc content and high bulk density and tapped density could be obtained.

The said organic binder is selected from stearic acid or its salts, paraffin, glycerol monostearate, polyethylene glycol, ethylene-vinyl acetate (EVA) and mixtures thereof. For example, the stearic acid salts may be selected from magnesium stearate, or zinc stearate. It was found that these organic binders were particularly suitable for use in the present invention.

According to one embodiment, the talc may be selected from micronized talc, bimodal talc, and cationic talc. It was found that the invention is applicable to all these types of talc.

According to one embodiment, the composition may be an essentially dry composition. For example, the water content may be 1 wt.-% or less. It was found that the compositions according to the present invention may suitably be used as dry compositions, without any detrimental effects.

According to one further embodiment, the talc and/or wollastonite particles that form part of the inorganic particulate material in the composition according to the invention may have a D₅₀ in the range of 1 µm to 30 µm, and/or a D₉₅ in the range of 5 µm to 80 µm. For example, the talc particles that for part of the inorganic particulate material in the composition according to the invention may have a D₅₀ in the range of 1 µm to 10 µm and/or a D₉₅ in the range of 5 µm to 40 µm. For example, the talc particles that for part of the inorganic particulate material in the composition according to the invention may have a D₅₀ in the range of 3 µm to 30 µm and/or a D₉₅ in the range of 20 µm to 80 µm. It was found that the present invention was particularly suitable for compaction of particulate materials of these particle sizes.

According to one further embodiment, the compressed granulated composition has a tapped density in accordance with ISO 787/11 of 0.6 to 1.4 g/cm³. Higher densities lead to better efficiency on storage, transport and handling of the compositions.

Also part of the present invention is a method for producing a compressed granulated composition of the invention, comprising the steps of compounding an organic binder, optionally water, and a particulate inorganic material in a mixing tank, followed by pelletising the obtained mixture. It was found that when the above mentioned components are used, standard pelletising techniques known to the skilled person in the art may be employed.

According to one embodiment, the method comprises an additional step of drying the mixture either prior to or after pelletisation by heating. It was found that a removal of water, if required, may be carried out at any time of the production process.

According to one embodiment, the method comprises an additional step of heating the organic binder prior to admixing with the water and the particulate material. Heating the said organic binder may help mixing of the components in the admixing step.

According to one further embodiment of the present invention, in the method, the organic binder is pre-mixed with water prior to admixture to the said particulate material, optionally wherein a surface agent is added to the mixture of organic binder and water. It was found that pre-mixing of the organic binder with water may improve the easy mixing of the components. Furthermore, the addition of a surface agent may help preparing the admixture.

Also part of the present invention is the use of the compressed granulated compositions of the invention as a filler in a polymeric composition, as is the filled polymeric composition comprising the composition of the present invention, or a derivate thereof. In accordance with the present invention, the compressed granulated compositions present certain advantages when used as fillers in polymeric compositions, such as improved handling and transport.

It is understood that the following description and references concern exemplary embodiments of the present invention and shall not be limiting the scope of the claims.

### DETAILED DESCRIPTION OF THE INVENTION

The present invention according to the appended claims provides compositions comprising particulate talc and/or wollastonite. The compositions may be in the shape of compressed compositions, such as tablets, pellets, granulates, aggregates, bricks, briquettes, pressings, moulds, preforms, spray-dried powders, rods, or any mixtures thereof.

Inorganic particulates have been used as fillers in polymeric compositions for a long time. Talc and wollastonite are particularly popular as fillers. The fillers are generally provided in dry form to the end user. As such, it is advantageous to compress the inorganic particulate matter into pellets or other compressed forms, in order to simplify handling and avoid dust formation. It is advantageous to provide compressed inorganic particulate matters having (i) a high weight content of the active ingredient, in this case talc and/or wollastonite, and (ii) a high bulk density and tapped density, in order to limit the volume occupied by the compressed particulate matter. It is further preferred than upon end-use, the compressed particulate matter has good dispersability in the polymeric composition, in other words, deagglomeration of the compressed form should be easy and efficient to obtain.

Natural minerals are not found in pure form. As used herein, the term "talc" means either the magnesium silicate mineral, or the mineral chlorite (magnesium aluminium silicate), or a mixture of the two, optionally associated with other minerals, for example, dolomite and/or magnesite, or furthermore, synthetic talc, also known as talcose.

As used herein, the term "wollastonite" means either calcium inosilicate mineral (CaSiO3) that may contain small amounts of iron, magnesium, and manganese substituting for calcium. It may also contain associated minerals such as garnets, vesuvianite, diopside, tremolite, epidote, plagioclase feldspar, pyroxene and calcite.

The present invention is based on the use of organic binders to provide compressed particulate talc and/or wollastonite. It was found that particularly high concentrations of talc and/or wollastonite can be obtained when 1 to 7 wt.-% organic binder are employed, based on the total weight of the non-aqueous components in the composition. A particular advantage is that the use of the organic binder may be employed in the presence or in the absence of water. The compressed particulate material may then be dried after compaction. Finally, the use of the mentioned amounts of organic binder lead to ideal compromise of compaction on the one hand and dispersability and mechanical performance on the other hand.

### Organic binder

The organic binder may be present in an amount of 1 wt.-% to 7 wt.-% based on the total amount of the non-aqueous components in the composition material. For example, the composition according to the present invention comprises about 1 wt.-% organic binder, or about 2 wt.-% organic binder, or about 3 wt.-% organic binder, or about 4 wt.-% organic binder, or about 5 wt.-% organic binder, or about 6 wt.-% organic binder, or about 7 wt.-% organic binder, or from 1.5 wt.-% to 6.0 wt.-% organic binder, or from 2.0 wt.-% to 5.0 wt.-% organic binder, or from 2.5 wt.-% to 4.0 wt.-% organic binder, or from 3.0 wt.-% to 3.5 wt.-% organic binder, or from 1.5 wt.-% to 3.0 wt.-% organic binder, based on the total amount of non-aqueous components.

The organic binder employed is selected from stearic acid or its salts, paraffin, glycerol monostearate, polyethylene glycol, ethylene-vinyl acetate (EVA) and mixtures thereof. For example, if the organic binder is a stearic acid salt, it may be magnesium stearate, or zinc stearate, or a mixture thereof.

### Addition of water

Water may be comprised in the composition according to the present invention by up to 25 wt.-%, based on the total amount of non-aqueous components. For example, the compressed composition may comprise about 1 wt.-% water, or about 2 wt.-% water, or about 3 wt.-% water, or about 4 wt.-% water, or about 5 wt.-% water, or about 6 wt.-% water, or about 7 wt.-% water, or about 8 wt.-% water, or about 9 wt.-% water, or about 10 wt.-% water, or about 15 wt.-% water, or about 20 wt.-% water, or about 25 wt.-% water, or about 30 wt.-% water, or about 35 wt.-% water, or about 40 wt.-% water, or about 45 wt.-% water, or about 50 wt.-% water, based on the total weight of non-aqueous material. For example, the composition according to the present invention may comprise from 1 wt.-% to 50 wt.-% water, or from 2 wt.-% to 4 wt.-% water, or from 3 wt.-% to 30 wt.-% water, or from 4 wt.-% to 20 wt.-% water, or from 5 wt.-% to 15 wt.-% water, or from 6 wt.-% to 12 wt.-% water, or from 7 wt.-% to 10 wt.-% water, based on the total amount of non-aqueous components in the composition.

In other embodiments, the composition according to the present invention may be essentially free of water. For example the composition may comprise water in amount that is no longer detectable by ordinary means, or the composition may comprise less than 1 wt.-% water, or less than 0.5 wt.-% or less than 0.3 wt.-% water, based on the total amount of non-aqueous components in the composition.

Water may be added in order to ease compaction of the particulate inorganic material in the presence of organic binder, and may subsequently be removed, or not, depending on the requirements of the end material.

### Inorganic particulate material

The present invention concerns the provision of compressed compositions of particulate inorganic material selected from talc and/or wollastonite. According to the present invention, the composition may comprise any relative proportion of talc and wollastonite. For example, the inorganic particulate material may consist of or essentially consist of talc, or the inorganic particulate material may consist of or essentially consist of wollastonite. In other embodiments, the inorganic particulate may be a 1:1 (by weight) mixture of talc and wollastonite, or an about 1:1 (by weight) mixture of talc and wollastonite, or a 2:1 (by weight) mixture of talc and wollastonite, or an about 2:1 (by weight) mixture of talc and wollastonite a 1:2 (by weight) mixture of talc and wollastonite, or an about 1:2 (by weight) mixture of talc and wollastonite a 3:1 (by weight) mixture of talc and wollastonite, or an about 3:1 (by weight) mixture of talc and wollastonite a 1:3 (by weight) mixture of talc and wollastonite, or an about 1:3 (by weight) mixture of talc and wollastonite a 5:1 (by weight) mixture of talc and wollastonite, or an about 5:1 (by weight) mixture of talc and wollastonite a 1:5 (by weight) mixture of talc and wollastonite, or an about 1:5 (by weight) mixture of talc and wollastonite a 10:1 (by weight) mixture of talc and wollastonite, or an about 10:1 (by weight) mixture of talc and wollastonite a 1:10 (by weight) mixture of talc and wollastonite, or an about 1:10 (by weight) mixture of talc and wollastonite.

In accordance with the present invention, the amount of talc and/or wollastonite may be from 90 to 99 wt.-%, based on the total amount of non-aqueous components in the composition. For example, the amount of talc and/or wollastonite may be about 90 wt.-%, or about 91 wt.-%, or about 92 wt.-%, or about 93 wt.-%, or about 94 wt.-%, or about 95 wt.-%, or about 96 wt.-%, or about 97 wt.-%, or about 98 wt.-%, or about 99 wt.-%, or from 91 wt.-% to 98 wt.-%, or from 92 wt.-% to 97 wt.-%, or from 93 wt.-% to 96 wt.-%, or from 94 wt.-% to 95 wt.-%.

As can be seen, the composition according to the present invention comprises from 1 wt.-% to 7 wt.-% organic binder and from 90 wt.-% to 99 wt.-% inorganic particulate matter, based on the total amount of non-aqueous components in the composition. The rest (up to 100 wt.-%) may be made up by surface active agents and/or impurities. However, the composition according to the present invention may also comprise essentially 100 wt.-% organic binder and inorganic particulate matter, based on all the non-aqueous materials.

In accordance with one embodiment of the present invention, the talc may be a micronized talc. In accordance with one embodiment of the present invention, the talc may have a monomodal particle size distribution, or the talc may have a polymodal particle size distribution, such as for example a bimodal particle size distribution. In accordance with one embodiment of the present invention, the talc may be a cationic talc.

Similarly, in accordance with the present invention, the wollastonite may be present as a finely divided wollastonite. In accordance with one embodiment of the present invention, the wollastonite may have a monomodal particle size distribution, or the wollastonite may have a polymodal particle size distribution, such as for example a bimodal particle size distribution.

In accordance with the present invention, the talc may have a median particle size (D₅₀) in the range of 1 µm to 10 µm, for example the D₅₀ of the talc may be about 1 µm, or about 2 µm, or about 3 µm, or about 4 µm, or about 5 µm, or about 6 µm, or about 7 µm, or about 8 µm, or about 9 µm, or about 10 µm, or from 2 µm to 9 µm, or from 3 µm to 8 µm, or from 4 µm to 7 µm, or from 3.5 µm to 6 µm.

In accordance with the present invention, the talc may have a D₉₅ particle size in the range of 5 µm to 40 µm, for example the D₉₅ of the talc may be about 5 µm, or about 10 µm, or about 15 µm, or about 20 µm, or about 25 µm, or about 30 µm, or about 35 µm, or about 40 µm, or from 7 µm to 35 µm, or from 10 µm to 30 µm, or from 12 µm to 25 µm, or from 15 µm to 20 µm, or from 8 µm to 18 µm.

In accordance with the present invention, the wollastonite may have a median particle size (D₅₀) in the range of 3 µm to 30 µm, for example the D₅₀ of the wollastonite may be about 3 µm, or about 5 µm, or about 10 µm, or about 15 µm, or about 20 µm, or about 25 µm, or about 30 µm, or from 5 µm to 25 µm, or from 8 µm to 22 µm, or from 10 µm to 20 µm, or from 12 µm to 18 µm, or from 8 µm to 15 µm.

In accordance with the present invention, the wollastonite may have a D₉₅ particle size in the range of 20 µm to 80 µm, for example the D₉₅ of the wollastonite may be about 20 µm, or about 30 µm, or about 40 µm, or about 50 µm, or about 60 µm, or about 70 µm, or about 80 µm, or from 25 µm to 75 µm, or from 35 µm to 65 µm, or from 45 µm to 55 µm, or from 30 µm to 50 µm, or from 22 µm to 40 µm.

Unless otherwise stated, particle size properties for talc referred to herein for the inorganic particulate materials are as measured in a well-known manner by sedimentation of the particulate material in a fully dispersed condition in an aqueous medium using a Sedigraph 5100 machine as supplied by Micromeritics Instruments Corporation, Norcross, Georgia, USA (www.micromeritics.com), referred to herein as a "Micromeritics Sedigraph 5100 unit", and measured in accordance with ISO 13317-3. Such an instrument provides measurements and a plot of the cumulative percentage by weight of particles having a size, referred to in the art as the 'equivalent spherical diameter' e.s.d), less than given e.s.d values. The mean particle size D₅₀ is the value determined in this way of the particle e.s.d at which there are 50% by weight of the particles which have an equivalent spherical diameter less than that D₅₀ value. The D₉₅ value is the value at which 95 % by weight of the particles have an esd less than that D₉₅ value.

The compressed particulate compositions according to the present invention may have a tapped density of 0.6 g/cm³ or higher, or of 1.4 g/cm³ or lower. For example, the tapped density may be from 0.6 g/cm³ to 1.4 g/cm³, or from 0.7 g/cm³ to 1.3 g/cm³, from 0.8 g/cm³ to 1.2 g/cm³, from 0.9 g/cm³ to 1.1 g/cm³, from 1.0 g/cm³ to 1.4 g/cm³, such as for example about 0.6 g/cm³, or about 0.7 g/cm³, or about 0.8 g/cm³, or about 0.9 g/cm³, or about 1.0 g/cm³, or about 1.1 g/cm³, or about 1.2 g/cm³, or about 1.3 g/cm³, or about 1.4 g/cm³. As used herein the tapped density of the compressed particulate compositions are measured in accordance with ISO 787/11.

### Methods for producing compressed materials

The present invention also concerns methods for the production of the compositions according to the invention, i.e. methods for obtaining the compressed granulated compositions from their respective raw materials.

According to the present invention, the compositions may be obtained by (i) admixing an organic binder, optionally water and an inorganic particulate materials selected from talc and/or wollastonite, and (ii) compressing the said compounded mixture.

According to the present invention, the compression step may serve to shape the inorganic particulate matter with the organic binder and optionally the water into shapes that are practical for handling, such as tablets, pellets, granulates, aggregates, bricks, briquettes, pressings, moulds, preforms, spray-dried powders, rods, or any mixtures thereof. These compression methods are known to the skilled person in the art. For example, pellets may be obtained using a KAHL press, or a California Pellet Mill, or an Alexanderwerk press.

The addition of water may aid the cohesion of the inorganic particulate material, but it is not absolutely required. For example, no water may be added to the mixture, or some water may be added to the mixture. In case water is added to the mixture, this may be removed by heating either prior to or after the compression step.

### Use of the compositions as fillers in polymeric materials

The present invention also concerns the use of the compressed compositions as fillers in polymeric materials. For example, the particulate talc and/or wollastonite comprised in the compressed compositions according to the invention may be employed as fillers in polymeric materials, such as polypropylenes, polyethylenes, polyamides, polyester-based blends etc.

The compressed compositions may be introduced into the polymeric materials by compounding.

It should be noted that the present invention may comprise any combination of the features and/or limitations referred to herein, except for combinations of such features which are mutually exclusive. The foregoing description is directed to particular embodiments of the present invention for the purpose of illustrating it. It will be apparent, however, to one skilled in the art, that many modifications and variations to the embodiments described herein are possible. All such modifications and variations are intended to be within the scope of the present invention, as defined in the appended claims.

### EXAMPLES

### Test series 1: Compaction of talc using various binders

Micronised talc (Steamic T1 - Imerys; bulk density: 1.00 g/cm³; D₅₀: 1.8 µm; D₉₅: 6.2 µm) was tested with and without organic binder (glycerol monostearate GMS, zinc stearate ZS, paraffin, polyethylene glycol PEG, magnesium stearate MgS, stearic acid SN d, styrene-ethylene/butylene-styrene, aqueous dispersion SEBS, and ethylene-vinyl acetate EVA). The micronized talc (95 wt.-% or more) and the organic binder (up to 5 wt.-%) were compressed into pellets in the presence of 10 wt.-% water, dried and subjected to the Turbula test, intended to simulate transport of the pellets. The samples used were as shown in Table I:

**Table I**

| | Additive | Water |
|---|---|---|
| Comp. Ex. 1 | None | 10 wt.-% |
| Ex. 1 | 5 wt.-% GMS | 10 wt.-% |
| Ex. 2 | 5 wt.-% paraffin | 10 wt.-% |
| Ex. 3 | 2 wt.-% PEG | 10 wt.-% |
| Ex. 4 | 3.3 wt.-% MgS | 10 wt.-% |
| Ex. 5 | 5 wt.-% ZnS | 10 wt.-% |
| Ex. 6 | 5 wt.-% SN d | 10 wt.-% |
| Ex. 7¹ | 5 wt.-% SEBS | 10 wt.-% |
| Ex. 8 | 5 wt.-% EVA | 10 wt.-% |

| | | |
|---|---|---|
| ¹ Ex.7 is a reference example | | |

The tapped densities (d) of the various samples were measured before Turbula test (0), after Turbula test (T), and after severe Turbula test (Ts), in which ceramic beads were introduced into the sample. The Turbula test was carried out using a Turbula^{®} T2F mixing equipment (Willy Bachoffen). It is used to shake the inorganic particulate material so as to reduce its compaction level. The method employed consisted of introducing 200 g of the compacted powder to be tested in a 1 L plastic container. After the container is closed, it is introduced in the Turbula basket and clamped. Then Turbula is set at full power for 10 minutes before the container is opened to take back the powder sample. The tapped densities were measured in accordance with ISO 787/11. The results are shown in Table II:

**Table II**

| | d(0) | d(T) | D(Ts) |
|---|---|---|---|
| Comp. Ex. 1 | 1.21 g/cm³ | 1.18 g/cm³ | 0.99 g/cm³ |
| Ex. 1 | 0.99 g/cm³ | 1.23 g/cm³ | 1.16 g/cm³ |
| Ex. 2 | 1.12 g/cm³ | 1.26 g/cm³ | 1.22 g/cm³ |
| Ex. 3 | 1.15 g/cm³ | 1.24 g/cm³ | 1.05 g/cm³ |
| Ex. 4 | 1.17 g/cm³ | 1.25 g/cm³ | 1.07 g/cm³ |
| Ex. 5 | 1.16 g/cm³ | 1.25 g/cm³ | 1.10 g/cm³ |
| Ex. 6 | 1.10 g/cm³ | 1.17 g/cm³ | 1.02 g/cm³ |
| Ex. 7¹ | 1.06 g/cm³ | 1.23 g/cm³ | 0.99 g/cm³ |
| Ex. 8 | 0.98 g/cm³ | 1.26 g/cm³ | 1.06 g/cm³ |

| | | | |
|---|---|---|---|
| ¹ Ex.7 is a reference example | | | |

While the use of organic binder does not appear to show improvements on the neat (fresh) material, after simulation of transport under normal and severe conditions, the tapped densities of the products treated with glycerol monostearate and zinc stearate show clearly improved tapped densities, leading to easier handling of the compacted inorganic materials at the point of use.

The sieve residue (SR) at various mesh sizes of the pellets before (0) and after (T) Turbula testing were also measured. The results are shown in Table III:

**Table III**

| | SR (0) | | | | SR (T) | | | |
|---|---|---|---|---|---|---|---|---|
| | 1 mm | 750 µm | 500 µm | < 500 µm | 1 mm | 750 µm | 500 µm | < 500 µm |
| Comp. Ex. 1 | 76.3% | 7.8% | 5.4% | 10.7% | 45.7% | 5.1% | 10.5% | 36.7% |
| Ex. 1 | 81.7% | 4.3% | 3.5% | 11.1% | 61.9% | 2.5% | 2.5% | 33.2% |
| Ex. 2 | 82.3% | 3.6% | 3.2% | 11.7% | 86.0% | 2.2% | 2.1% | 10.8% |
| Ex. 3 | 88.2% | 3.7% | 2.5% | 5.9% | 78.7% | 1.8% | 1.4% | 19.4% |
| Ex. 4 | 79.0% | 6.9% | 4.9% | 9.6% | 56.4% | 6.6% | 6.0% | 30.0% |
| Ex. 5 | 70.0% | 7.9% | 6.3% | 16.0% | 56.9% | 5.9% | 5.2% | 31.5% |
| Ex. 6 | 70.9% | 7.0% | 5.5% | 16.9% | 69.7% | 1.4% | 1.4% | 27.8% |
| Ex. 7¹ | 69.0% | 7.5% | 6.3% | 19.0% | 58.3% | 3.2% | 3.2% | 35.2% |
| Ex. 8 | 87.7% | 4.4% | 2.4% | 5.8% | 61.2% | 5.0% | 8.0% | 26.0% |

| | | | | | | | | |
|---|---|---|---|---|---|---|---|---|
| ¹ Ex.7 is a reference example | | | | | | | | |

It is apparent that the compacted particles obtained using organic binders are all more stable under transport testing conditions.

### Test series 2: Dispersion of the compacted talcs

Some of the compacted talcs shown in Table I above were tested by dispersion into a 200 µm polypropylene film.

40 g of High-viscosity polypropylene resin, type ATO PPC 2660 grade 0,8 was introduced in the mixer (Brabender Plastograph EC plus, equipped with Mixer 50 which includes 2 cylindrical rotors), and set at 170°C at 70 rpm. When the polymer had melted and torque reached 10 N/m, mixer speed was increased to 100 rpm. 10 g of the compacted mineral was introduced, and time count started. After 8 min mixing, or after 10 min mixing, a 5 g sample of the compound is taken out and cooled down.

The obtained samples were pressed into films using a Gibitre Press at 200°C, with a 200 µm thick and 100 mm diameter mould between the press plates. 2.5 g of compound was placed on the lower metal plate sandwiched between two aluminium foils. The upper press plate was placed in contact with the compound to heat it for 9 min, then the plates were pressed at 200 bar on the compound for 5 s. The press was opened to take out the 100 mm diameter and 200 µm thick film which was then cooled for 3 minutes before removing the aluminium foils.

The number of agglomerates greater than 50 µm were counted by optical inspection after dispersion durations of 8 minutes and 10 minutes. This was done using a Nikon binocular SMZ-10, with magnification in position 1 (field 44 mm). The mineral agglomerates were identified by alternating the film illumination by reflection and transmission. The black particles in transmission revealed as white in reflection were considered to be mineral agglomerates. Observation was carried out over the whole of the 100 mm diameter film. All agglomerates above 50 µm were counted. The results are shown in Table IV.

**Table IV**

| | Dispersion 8 minutes | Dispersion 10 minutes |
|---|---|---|
| Comp. Ex. 1 | > 200 | > 200 |
| Ex. 1 | 20 | 8 |
| Ex. 2 | 140 | 136 |
| Ex. 3 | 144 | 108 |
| Ex. 4 | 52 | 48 |
| Ex. 5 | 16 | 8 |
| Ex. 6 | 24 | > 200 |
| Ex. 7¹ | > 200 | > 200 |
| Ex. 8 | > 200 | > 200 |

| | | |
|---|---|---|
| ¹ Ex.7 is a reference example | | |

The use of most organic binders gave better results than the use of talc without organic binder.

### Test series 3: Mechanical performance of talc filled polypropylenes

The compacted talcs according to the present invention were loaded into polypropylene compositions at 20 wt.-% loading. An extruder was side fed by adding the mineral or mineral composition via forced side feeder. In addition to the compacted talcs according to the Comparative Example 1 above and the Examples above, an unfilled polypropylene and a polypropylene filled with a non compacted talc were tested. The polypropylenes obtained were tested for flexural modulus (ISO 178), impact resistance (ISO 179-1eA) and heat deflection temperature (ISO 75/A). In addition the number of agglomerates greater than 50 µm was counted by optical inspection. The validity and reproducibility of the results is shown by the standard deviations (σ) obtained. The results are shown in Table V:

**Table V**

| | Flex modulus (MPa); σ | Charpy impact strength @ - 20°C (kJ/m²); σ | heat deflection temperature (°C); σ | Agglomerates |
|---|---|---|---|---|
| Unfilled | 1060; 9 | - | 47; 0.2 | - |
| Powder | 2550; 25 | 49; 3.4 | 60; 0.3 | 8 |
| Comp. Ex. 1 | 2380; 42 | 21; 1.9 | 58; 0.4 | >> 200 |
| Ex. 2 | 2370; 22 | 36; 3.1 | 56; 0.7 | 36 |
| Ex. 3 | 2420; 17 | 35; 2.5 | 56; 0.7 | 45 |
| Ex. 4 | 2540; 18 | 42; 3.8 | 57; 0.4 | 12 |
| Ex. 5 | 2520; 29 | 36; 3.6 | 58; 0.4 | 16 |
| Ex. 6 | 2550; 28 | 53; 3.1 | 57; 0.4 | 20 |

The compacted talc from the Comparative Example is not well dispersed (> 200 agglomerates) and provides lower reinforcement and lower impact resistance. The use of the additives at 2 to 5 wt.-% ensures much better redispersion and good reinforcement, even very close to the pure talc powder.

### Test series 4: Mechanical performance of talc/wollastonite-filled polypropylenes

Various talc and talc/wollastonite compositions were compacted and pelletised, and subsequently loaded into polypropylene compositions at about 20.0 wt.-% loading. Micronised talc (Luzenac A3 - Imerys Austria; D₅₀: 1.2 µm; D₉₅: 3.5 µm) and wollastonite (Nyglos 4W - NYCO; diameter: 7 µm; average length: 63 µm) were tested as in test series 3. The organic binder employed was glycerol monostearate (GMS; Atmer 1013 - Croda Polymer Additives).

The talc/wollastonite mixtures were treated with a GMS/water mixture, obtained by dissolving the GMS in water at about 70°C. 500 g talc/wollastonite mixture was mixed in a Henschel mixer at 750 rpm for 2 minutes. The relevant amount of GMS/water mixture was added carefully. After addition of 75% of the GMS/water mixture, the mixing speed was reduced to 350 rpm at the remaining 25% GMS/water mixture was added. The mixing was stopped, any material adhering to the sides of the contained was scraped down using a spatula, and the mixture was then mixed at 1000 rpm for a total of 10 minutes, with a stop after 5 minutes to scrape down any material adhering to the sides of the contained.

The treated talc/wollastonite mixtures were compacted using a Kahl press (2.5 compaction ratio, die 6/15), with rollers at low speed. The obtained pellets were dried at 80°C for 18 h. The formulations as shown in Table VI were pelletised:

**Table VI**

| | Talc | Wollastonite | GMS | Water |
|---|---|---|---|---|
| Comp. Ex. 2 | 66 wt.-% | 34 wt.-% | None | 35 wt.-% |
| Comp. Ex. 3 | 66 wt.-% | 34 wt.-% | None | 40 wt.-% |
| Ex. 9 | 66 wt.-% | 33 wt.-% | 1 wt.-% | 35 wt.-% |
| Ex. 10 | 65 wt.-% | 33 wt.-% | 2 wt.-% | 35 wt.-% |
| Ex. 11 | 65 wt.-% | 32 wt.-% | 3 wt.-% | 35 wt.-% |
| Ex. 12 | 66 wt.-% | 33 wt.-% | 1 wt.-% | 40 wt.-% |
| Ex. 13 | 65 wt.-% | 33 wt.-% | 2 wt.-% | 35 wt.-% |

Eventhough the exact amount of water in the pelletised compositions has not been measured, it is thought that this is considerably below the amount of water introduced, since a drying process of 18 h at 80°C was carried out, thus bringing the water content down to 0.5 wt.-% or less.

The polypropylenes obtained were tested for flexural modulus (ISO 178), impact resistance (ISO 179-1eA) and heat deflection temperature (ISO 75/A). In addition the number of agglomerates greater than 50 µm was counted by optical inspection. The validity and reproducibility of the results is shown by the standard deviations (σ) obtained. The results are shown in Table VII:

**Table VII**

| | Flex modulus (MPa); σ | Charpy impact strength @ - 20°C (kJ/m²); σ |
|---|---|---|
| Comp. Ex. 2 | 2559; 19 | 42; 4 |
| Comp. Ex. 3 | 2637; 42 | 37; 3 |
| Ex. 9 | 2625; 21 | 49; 4 |
| Ex. 10 | 2657; 23 | 53; 4 |
| Ex. 11 | 2684; 18 | 48; 5 |
| Ex. 12 | 2578; 26 | 52; 6 |
| Ex. 13 | 2705; 16 | 51; 5 |

It was found that the compositions in accordance with the present invention could provide equivalent or improved properties to the filled polypropylenes over the comparative compositions.

## Claims

1. Composition comprising
from 1 to 7 wt.-% organic binder;
from 0 to 50 wt.-% water; and
for 90 to 99 wt.-% inorganic particulate material selected from talc, wollastonite or a mixture thereof,
wherein the composition is a compressed granulated composition., such as brick, a briquette, a pellet, a pressing, a mould, a preform, a spray-dried powder, a tablet, an aggregate, a rod, a granulate, or an agglomerate, or any mixture thereof,
wherein the wt.-% is expressed compared to the total content non-aqueous components in the said composition,
further wherein the said organic binder is selected from stearic acid or its salts, paraffin, glycerol monostearate, polyethylene glycol, ethylene-vinyl acetate (EVA) and mixtures thereof.

2. Composition according to claim 1, wherein the said stearic acid salts are selected from magnesium stearate, or zinc stearate.

3. Composition according to claim 1 or 2 wherein the said talc is selected from a micronized talc, a bimodal talc, and a cationic talc.

4. Composition according to any one of the previous claims, which is an essentially dry composition, for example which has a water content of 1 wt.-% or less.

5. Composition according to any one of the previous claims, wherein the said talc and/or wollastonite has a median particle size (D₅₀) in the range of 1 µm to 30 µm and/or wherein the said talc and/or wollastonite has a D₉₅ in the range of 5 µm to 80 µm.

6. Composition according to any one of the previous claims, wherein the said compressed granulated composition is selected from a brick, a briquette, a pellet, a pressing, a mould, a preform, a spray-dried powder, a tablet, an aggregate, a rod, a granulate, or an agglomerate, or any mixture thereof.

7. Composition according to any one of the previous claims, wherein the said compressed granulated composition has a tapped density in accordance with ISO 787/11 of 0.6 to 1.4 g/cm³.

8. Method for producing a composition according to any one of the previous claims, comprising admixing an organic binder, optionally water, and an inorganic particulate material in a mixing tank, and pelletising the obtained mixture.

9. Method according to claim 8, comprising the additional step of drying the mixture either prior to or after pelletisation by heating.

10. Method according to claim 8 or 9, comprising an additional step of heating the organic binder prior to admixing with the water and the particulate material.

11. Method according to any one of claims 8 to 10, wherein the organic binder is pre-mixed with water prior to admixing with the said particulate material, optionally wherein a surface agent is added to the mixture of organic binder and water.

12. Use of the composition of any one of claims 1 to 7 as a filler in a polymer composition.

13. Filled polymer comprising the composition of any one of claims 1 to 7, or a derivate thereof.

## Patentansprüche

1. Zusammensetzung, umfassend:
1 bis 7 Gew.-% organisches Bindemittel;
0 bis 50 Gew.-% Wasser und
90 bis 99 Gew.-% anorganisches teilchenförmiges Material ausgewählt aus Talkum, Wollastonit oder einer Mischung davon, wobei die Zusammensetzung eine komprimierte granulierte Zusammensetzung ist, wie etwa Ziegel, ein Brikett, ein Pellet, ein Pressteil, eine Form, ein Vorformling, ein sprühgetrocknetes Pulver, eine Tablette, ein Aggregat, ein Stab, ein Granulat oder ein Agglomerat oder eine beliebige Mischung davon,
wobei die Gew.-% bezogen auf den Gesamtgehalt an nichtwässrigen Komponenten in der Zusammensetzung ausgedrückt werden,
wobei das organische Bindemittel ferner aus Stearinsäure oder deren Salzen, Paraffin, Glycerinmonostearat, Polyethylenglykol, Ethylen-Vinylacetat (EVA) und Mischungen davon ausgewählt ist.

2. Zusammensetzung nach Anspruch 1, wobei die Stearinsäuresalze aus Magnesiumstearat oder Zinkstearat ausgewählt sind.

3. Zusammensetzung nach Anspruch 1 oder 2, wobei das Talkum aus einem mikronisierten Talkum, einem bimodalen Talkum und einem kationischen Talkum ausgewählt ist.

4. Zusammensetzung nach einem der vorhergehenden Ansprüche, die eine im Wesentlichen trockene Zusammensetzung ist, die beispielsweise einen Wassergehalt von 1 Gew.-% oder weniger aufweist.

5. Zusammensetzung nach einem der vorhergehenden Ansprüche, wobei das Talkum und/oder der Wollastonit eine mittlere Teilchengröße (D₅₀) im Bereich von 1 µm bis 30 µm aufweist und/oder wobei das Talkum und/oder der Wollastonit eine D₉₅ im Bereich von 5 µm bis 80 µm aufweist.

6. Zusammensetzung nach einem der vorhergehenden Ansprüche, wobei die komprimierte granulierte Zusammensetzung aus einem Ziegel, einem Brikett, einem Pellet, einem Pressteil, einer Form, einem Vorformling, einem sprühgetrockneten Pulver, einer Tablette, einem Aggregat, einem Stab, einem Granulat oder einem Agglomerat oder einer beliebigen Mischung davon ausgewählt ist.

7. Zusammensetzung nach einem der vorhergehenden Ansprüche, wobei die komprimierte granulierte Zusammensetzung eine Stampfdichte gemäß ISO 787/11 von 0,6 bis 1,4 g/cm³ aufweist.

8. Verfahren zum Produzieren einer Zusammensetzung nach einem der vorhergehenden Ansprüche, umfassend Zumischen eines organischen Bindemittels, optional Wasser und eines anorganischen teilchenförmigen Materials in einem Mischbehälter und Pelletieren der erhaltenen Mischung.

9. Verfahren nach Anspruch 8, umfassend den zusätzlichen Schritt des Trocknens der Mischung entweder vor oder nach dem Pelletieren durch Erhitzen.

10. Verfahren nach Anspruch 8 oder 9, umfassend einen zusätzlichen Schritt des Erhitzens des organischen Bindemittels vor dem Zumischen zu dem Wasser und dem teilchenförmigen Material.

11. Verfahren nach einem der Ansprüche 8 bis 10, wobei das organische Bindemittel vor dem Zumischen zu dem teilchenförmigen Material mit Wasser vorgemischt wird, wobei der Mischung aus organischem Bindemittel und Wasser optional ein Oberflächenmittel zugesetzt wird.

12. Verwendung der Zusammensetzung nach einem der Ansprüche 1 bis 7 als Füllstoff in einer Polymerzusammensetzung.

13. Gefülltes Polymer, umfassend die Zusammensetzung nach einem der Ansprüche 1 bis 7 oder ein Derivat davon.

## Revendications

1. Composition comprenant
de 1 à 7 % en poids de liant organique ;
de 0 à 50 % en poids d'eau ; et
de 90 à 99 % en poids de matériau particulaire inorganique choisi parmi le talc, la wollastonite ou un mélange de ceux-ci,
dans laquelle la composition consiste en une composition granulée comprimée, telle qu'une brique, une briquette, une pastille, un pressage, un moule, une préforme, une poudre séchée par pulvérisation, un comprimé, un agrégat, une tige, un granulé ou un agglomérat, ou tout mélange de ceux-ci,
dans laquelle le % en poids est exprimé par rapport à la teneur totale en composants non aqueux de ladite composition,
dans laquelle ledit liant organique est choisi parmi l'acide stéarique ou ses sels, la paraffine, le monostéarate de glycérol, le polyéthylène glycol, l'éthylène-acétate de vinyle (EVA) et des mélanges de ceux-ci.

2. Composition selon la revendication 1, dans laquelle lesdits sels d'acide stéarique sont choisis parmi le stéarate de magnésium ou le stéarate de zinc.

3. Composition selon la revendication 1 ou 2, dans laquelle ledit talc est choisi parmi un talc micronisé, un talc bimodal et un talc cationique.

4. Composition selon l'une quelconque des revendications précédentes, qui est une composition pratiquement sèche, par exemple dont la teneur en eau est inférieure ou égale à 1 % en poids.

5. Composition selon l'une quelconque des revendications précédentes, dans laquelle ledit talc et/ou ladite wollastonite a un diamètre médian de particules (D₅₀) dans la plage de 1 um à 30 um et/ou dans laquelle ledit talc et/ou ladite wollastonite a un D₉₅ dans la plage de 5 um à 80 µm.

6. Composition selon l'une quelconque des revendications précédentes, dans laquelle ladite composition granulée comprimée est choisie parmi une brique, une briquette, une pastille, un pressage, un moule, une préforme, une poudre séchée par atomisation, un comprimé, un agrégat, une tige, un granulé, ou un agglomérat, ou tout mélange de ceux-ci.

7. Composition selon l'une quelconque des revendications précédentes, dans laquelle ladite composition granulée comprimée a une masse volumique après tassement selon ISO 787/11 de 0,6 à 1,4 g/cm³.

8. Procédé de fabrication d'une composition selon l'une quelconque des revendications précédentes, comprenant le mélange d'un liant organique, de l'eau éventuellement, et d'un matériau particulaire inorganique dans une cuve de mélange, et la granulation du mélange obtenu.

9. Procédé selon la revendication 8, comprenant l'étape supplémentaire de séchage du mélange soit avant, soit après la granulation par chauffage.

10. Procédé selon la revendication 8 ou 9, comprenant une étape supplémentaire de chauffage du liant organique avant le mélange avec l'eau et le matériau particulaire.

11. Procédé selon l'une quelconque des revendications 8 à 10, dans lequel le liant organique est pré-mélangé avec de l'eau avant d'être mélangé avec ledit matériau particulaire, éventuellement dans lequel un agent de surface est ajouté au mélange de liant organique et d'eau.

12. Utilisation de la composition selon l'une quelconque des revendications 1 à 7 comme charge dans une composition polymère.

13. Polymère chargé comprenant la composition selon l'une quelconque des revendications 1 à 7, ou dérivé de celui-ci.
